# EUROPÄISCHE PATENTSCHRIFT

(11) **EP 1 281 312 B1**
(45) Veröffentlichungstag und Bekanntmachung des Hinweises auf die Patenterteilung: **06.06.2007**
(21) Anmeldenummer: 02017049.4
(22) Anmeldetag: 27.07.2002
(51) Int. Cl.: A01D 57/20

(54) **Vorrichtung mit einem Aufnehmer, einem Förderer und einem Anschlussmittel zur Verbindung mit einem Fahrzeug**
Device with a pick-up, a conveyor and connecting means with a vehicle
Dispositif comportant un ramasseur, un convoyeur et moyen de connexion avec un véhicule

(30) Priorität: 04.08.2001 DE 10138445
(43) Veröffentlichungstag der Anmeldung: 05.02.2003
(73) Patentinhaber: DEERE & COMPANY, Moline, Illinois 61265-8098 (US)
(72) Erfinder: Franet, Roger, 57200 Sarreguemines (FR)
(74) Vertreter: Magin, Ludwig Bernhard

(56) Entgegenhaltungen:
- DD-A- 132 750
- DE-A- 19 645 629
- DE-C- 19 931 684
- FR-A- 2 304 270
- US-A- 4 332 125
- US-A1- 2001 003 239
- US-B1- 6 205 757

## Beschreibung

Die Erfindung betrifft eine Vorrichtung mit einem Aufnehmer, einem Förderer und einem Anschlussmittel zur Verbindung mit einem Fahrzeug, sowie ein Fahrzeug und ein Verfahren.

Die GB-A-2 215 971 offenbart eine Aufnahme- und Fördervorrichtung für auf dem Boden liegendes Gut, die an der Vorderseite eines Ackerschleppers angebaut ist und vor dem Ackerschlepper liegendes Gut zur Seite von diesem verlagert.

Das der Erfindung zugrunde liegende Problem wird darin gesehen, daß zu viele Arbeitsgänge erforderlich sind, um das Gut zu mähen und zusammenzuschwaden.

Die DE-C-199 31 684 zeigt ein selbstfahrendes Mähfahrzeug mit drei Mäheinheiten, von denen sich jeweils eine vorne, eine links und eine rechts des Fahrwerks befindet. Die vordere Mäheinheit legt das gemähte Gut zentrisch in einem Schwad zwischen den Rädern des Mähfahrzeugs ab, während die seitlichen Mäheinheiten das Gut zur Fahrzeugmitte fördern und es zwischen den Vorder- und den Hinterrädern auf das bereits zwischen den Rädern gebildete Schwad werfen.

Diese Ausführung lässt nur eine geringe Erntemenge zu, da der Raum für ein Schwad zwischen den Rädern relativ klein ist. Darüber hinaus kann das Gut im Randbereich des Schwads von darüberrollenden Rädern beschädigt werden.

Hieraus ergibt sich also das Problem der geringen Erntekapazität.

Schließlich ist es bekannt, nach dem Mähen auf dem Boden abgelegtes Gut mittels eines Wenders zusammenzufassen, was jedoch den Nachteil hat, daß der Wender Zinken verlieren kann oder Steine aufwirbelt, die dann als Fremdkörper in das Gut gelangen.

Außerdem ist aus der DE 196 45 629 ein Gerät bekannt, bei dem ein Zinkenrechen auf dem Boden liegendes Erntegut zu einem Schwad zusammenführt und dieses Schwad von einer Pick-Up aufgenommen wird, die es einem Förderer für eine evtl, seitliche Verlagerung aufgibt. Diese Pick-Up kann zwar in eine Betriebs- und in eine Außerbetriebsstellung gebracht werden, ist jedoch in ihrer räumlichen Zuordnung zu den Rechenkreisel gebunden.

Auch bei diesem Stand der Technik besteht das Problem verlorener Zinken, und es kann nur das mittig erstellte Schwad erfaßt werden.

Diese Probleme werden erfindungsgemäß durch die Lehre des Patentanspruchs 1, 7 bzw. 12 gelöst, wobei in den weiteren Patentansprüchen Merkmale aufgeführt sind, die die Lösung in vorteilhafter Weise weiterentwickeln.

Auf diese Weise kann die Vorrichtung z. B. an der Rückseite eines Fahrzeugs angebracht werden, an dessen Vorderseite sich eine Mäh- oder sonstige Vorrichtung befindet. Daraus resultiert eine bessere Auslastung und Einsatzmöglichkeit des Fahrzeugs beim Betrieb. Allerdings können einzelne Mäheinheiten der Mähvorrichtung auch seitlich und die Vorrichtung im rückwärtigen Bereich, z.T. ebenfalls seitlich, angeordnet werden. Wesentlich ist lediglich, daß sich die Vorrichtung stromabwärts der Mähvorrichtung an dem Fahrzeug befindet und somit das bereits abgelegte Gut aufnehmen und zur Seite fördern kann. Während diese Vorrichtung zwar vorzugsweise für ein Mähfahrzeug gedacht ist, sind auch andere Einsatzgebiete denkbar. Z.B. kann das Kraut von Rüben, Kartoffeln oder dergleichen Früchte nach dem separaten Köpfen aufgenommen und seitlich befördert werden. Die bewegliche, d.h. verstellbare Anbringung des Aufnehmers gegebenenfalls mit einem Förderer macht es möglich, den Aufnehmer in die für den Transport auf der Straße zugelassenen Grenzen zu schwenken oder gar an eine andere Stelle für den Betrieb zu verbringen. Beispielweise kann der Aufnehmer links oder rechts des Fahrzeugs eingesetzt werden.

Die feste Verbindung zwischen dem Förderer und dem Aufnehmer stellt sicher, daß das von dem Aufnehmer aufgenommene Gut stets ohne hängen zu bleiben auf den Förderer übergeleitet wird.

Mittels eines weiteren Förderers kann das aufgenommene Gut von dem ersten Förderer und dem zweiten Förderer über eine weite Strecke transportiert und somit evtl. von einer Seite des Fahrzeugs zur anderen transportiert werden.

Die Verstellbarkeit des weiteren Förderers erlaubt es, von der Möglichkeit des weiten Transports Gebrauch zu machen oder nicht. Z. B. kann der weitere Förderer in eine Stellung gebracht werden, in der das Gut hinter dem Fahrzeug anstatt seitlich von ihm abgelegt wird.

Stützräder sorgen zum einen für den gewollten Abstand des Aufnehmers zum Boden und zum anderen für eine Entlastung der tragenden Teile der Vorrichtung.

Die Ausbildungen des oder der Förderer/s als Förderband, Förderschnecke, Stabkettenförderer oder parallel zueinander verlaufende Rollen stellen beispielhaft geeignete Lösungen für einen schonenden und effektiven Transport dar.

Feldhäcksler oder andere Trägerfahrzeuge zum Einsatz in der Landwirtschaft mit Mähvorrichtungen an der Vorderseite stellen eine effektive Maschine zum Ernten von Gras oder anderen Gütern dar, wobei das Gut in Schwaden auf dem Boden abgelegt und mittels der Vorrichtung zu einem Schwad zusammengelegt werden kann, das von einem nachfolgenden Häckselfahrzeug aufgenommen und weiterbearbeitet werden kann. Feldhäcksler sind spezialisierte Trägerfahrzeug, die aufgrund ihrer Bauweise optimal geeignet sind, an der Vorder- und der Rückseite mit entsprechenden Ausrüstungen versehen zu werden.

Das Vorsehen einer gegenüber der Längsachse des Fahrzeugs seitlichen Abgabeöffnung der Mähvorrichtung ermöglicht es, einen Teil des von der Mähvorrichtung aufgenommenen Guts seitlich des Fahrzeugs anstatt zwischen seinen Räder abzulegen, sodaß Probleme mit einem hohen und zwischen den Rädern gelegenen Schwad nicht entstehen.

Die Verwendung einer Dreipunktkupplung erlaubt einen schnellen An- und Abbau der Vorrichtung an dem Fahrzeug.

Ein hydraulischer Antrieb kann mittels flexibler Schläuche gespeist werden, sodaß der Aufnehmer und/oder der bzw. die Förderer während ihrer Bewegung nicht auf evtl. starre Antriebsverbindungen Rücksicht nehmen müssen. Außerdem können mit einem hydraulischen Antrieb die Geschwindigkeit und/oder die Richtung des Förderers sehr einfach geändert werden, wodurch der Ablageort gewählt werden kann.

Wenn zwei Aufnehmer und Förderer verwendet werden, kann Gut, das auf beiden Seiten des Fahrzeugs in einem Schwad abgelegt wurde, zu einem breiten, mittig hinter dem Fahrzeug gelegenen Schwad zusammengefasst werden.

Mittels des beanspruchten Verfahrens ist eine höchst effektive Ernte und Gruppierung von Erntegut möglich, weil das Gut mit einem einzigen Fahrzeug und in einem einzigen Arbeitsgang vom Halm getrennt und in Schwaden abgelegt wird, die so nahe beieinander liegen, daß sie mit einem schmalen Aufnehmer eines Feldhäckslers, einer Presse, eines Ladewagens oder dergleichen aufgenommen werden können.

In der Zeichnung ist ein nachfolgend näher beschriebenes Ausführungsbeispiel der Erfindung dargestellt. Es zeigt:
- Fig. 1: ein Fahrzeug mit einer Mähvorrichtung und einer Vorrichtung mit einem Aufnehmer und zwei Förderern in Draufsicht und schematischer Darstellung,
- Fig. 2: die Vorrichtung in einer perspektivischen Ansicht von vorne,
- Fig. 3: das Fahrzeug mit der Vorrichtung in einer zweiten Anordnung und in Draufsicht,
- Fig. 4: das Fahrzeug mit der Vorrichtung in einer dritten Anordnung und in Draufsicht,
- Fig. 5: das Fahrzeug mit der Vorrichtung in einer vierten Anordnung und in Draufsicht, und
- Fig. 6: das Fahrzeug mit der Vorrichtung in einer fünften Anordnung und in Draufsicht.

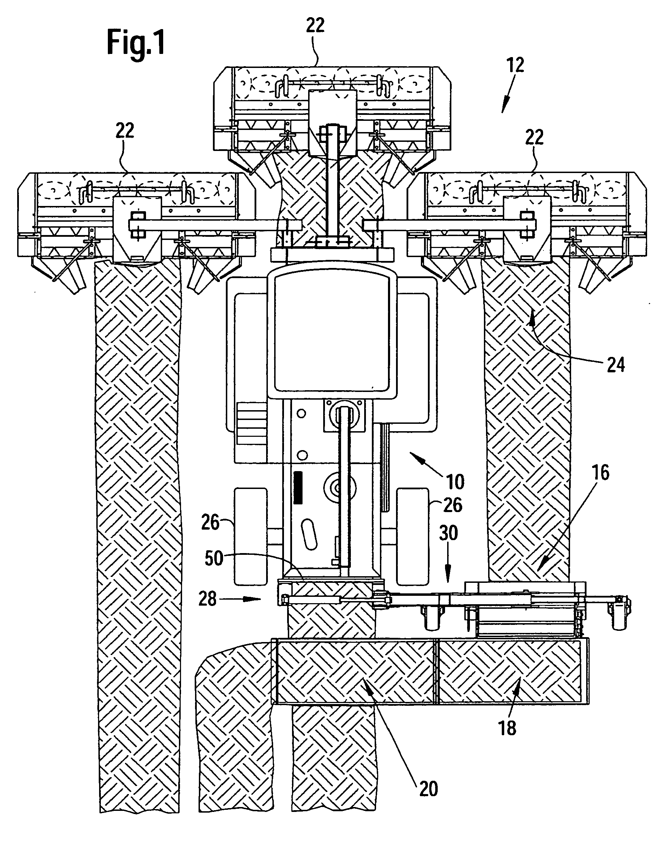

Figur 1 zeigt ein Fahrzeug 10 mit einer Mähvorrichtung 12 und einer Vorrichtung 14 mit einem Aufnehmer 16 und einem ersten Förderer 18 und einem weiteren Förderer 20.

Das Fahrzeug 10, das in der Draufsicht schematisch dargestellt ist, ist im einfachsten Fall ein selbstfahrender Feldhäcksler; allerdings könnte es auch eine andere selbstfahrende Arbeitsmaschine sein, z. B. ein Mähdrescher oder ein Geräteträger.

Die Mähvorrichtung 12 enthält in diesem Ausführungsbeispiel drei Mäheinheiten 22, und zwar eine mittige, eine linke und eine rechte, wobei sich die linke und die rechte im wesentlichen seitlich des Fahrzeugs 10 befinden und jeweils eine mit Bezug auf die Längsmittenachse des Fahrzeugs seitliche Abgabeöffnung 24 aufweisen. Jede Mäheinheit 22 ist vorzugsweise mit einer nicht gezeigten Aufbereitungseinheit, z. B. einem Mähschlagzetter oder Knickrollen, ausgerüstet und gibt das Erntegut durch die jeweilige Abgabeöffnung 24 in ein Schwad auf den Boden ab. Bei einem Fahrzeug 10 nach Figur 1 ergeben sich drei parallel zueinander verlaufende Schwade, wobei das mittige Schwad zwischen Rädern 26 des Fahrzeugs 10 auf dem Boden abgelegt wird. Während in der Zeichnung drei Mäheinheiten 22 vorgesehen sind, reichen auch zwei aus, von denen sich eine mittig zu und eine seitlich des Fahrzeugs 10 befindet, oder die sich beide seitlich des Fahrzeugs 10 befinden, bzw. das Gut seitlich ablegen. Andererseits sind auch mehr als zwei Mäheinheiten 22 möglich.

Die Vorrichtung 14 enthält außer dem Aufnehmer 16 und dem ersten Förderer 18 Anschlussmittel 28 und einen Träger 30.

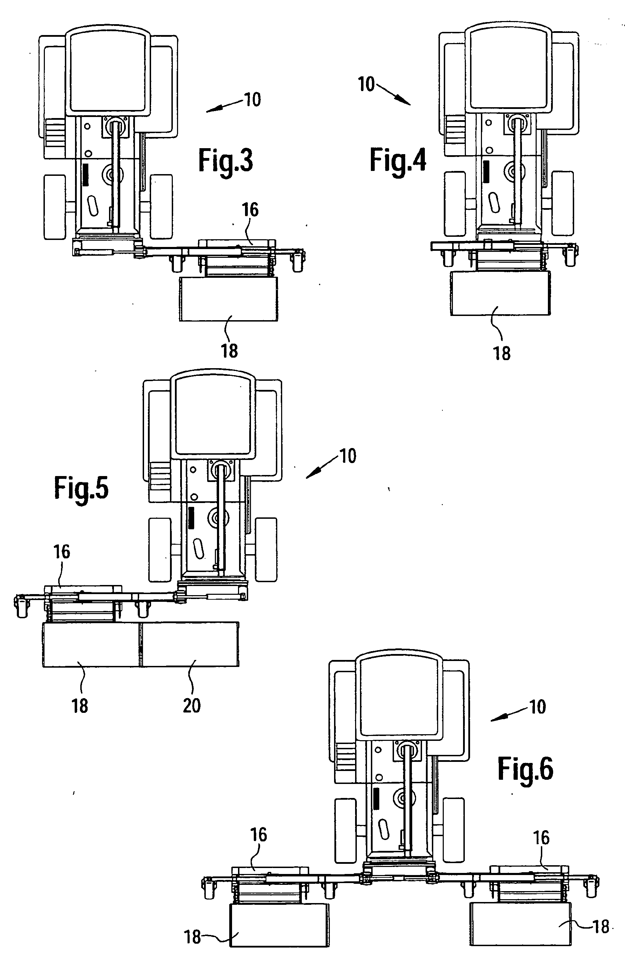

Die Vorrichtung 14 ist derart ausgebildet, daß sie sich im rückwärtigen Bereich des Fahrzeugs 10, insbesondere an dessen Rückseite anbauen lässt, was den Vorteil hat, daß das Gut ungehindert seitlich befördert werden kann. In dem dargestellten Ausführungsbeispiel ist eine Vorrichtung 14 gezeigt, die einen einzigen Aufnehmer 16 und einen ersten und einen zweiten Förderer 18 und 20 aufweist. Dies ist jedoch nur beispielhaft; vielmehr kann auch eine Vorrichtung mit zwei Aufnehmern 16 und mehreren Förderern 16 und 18 oder mehrere Vorrichtungen 14 vorgesehen werden. Die Vorrichtung 14 hat generell die Aufgabe, von einer Mäheinheit 22 auf den Boden abgelegtes und gegebenenfalls aufbereitetes Mähgut vom Boden aufzunehmen und seitlich zu befördern, um somit eng nebeneinander liegende Schwade oder aufeinanderliegende Schwade zu bilden, so daß ein nachfolgender Aufnehmer, z. B. an einem Feldhäcksler oder einer Presse, relativ viel Gut gegebenenfalls bei einer relativ schmalen Bauweise aufnehmen kann. So kann von einer seitlichen Mäheinheit 22 auf den Boden abgegebenes Erntegut aufgenommen und entweder auf bzw. neben dem mittleren oder dem gegenüberliegenden Schwad oder zwischen diesen abgelegt werden, etc. wie es insbesondere in den Figuren 3 bis 6 gezeigt ist.

Während in dem dargestellten Ausführungsbeispiel die Vorrichtung 14 mittels des Anschlussmittels 28 unmittelbar an ein Fahrgestell 50 des Fahrzeugs 10 angeflanscht und von diesem lösbar ist, könnte der Anschluß auch über eine Dreipunktgerätekupplung oder dergleichen in Schnellkuppelbauweise erfolgen.

Der Aufnehmer 16 ist in der Art einer sog. Pick-Up, d.h. mit vertikal umlaufenden Zinken ausgebildet. Ein Bandaufnehmer oder dergleichen wäre ebenfalls möglich. Die Aufnahmeseite befindet sich in Vorwärtsfahrtrichtung vorne und die Abgabeöffnung 24 hinten. Der Aufnehmer 16 enthält einen Rahmen 32, an den seitlich um eine vertikale Achse pendelnde Stützräder 34 angebracht sind und der in der Mitte ein als Pendellager ausgebildetes Lager 36 mit einer horizontalen Lagerachse enthält, über das der Aufnehmer 16 mit dem Träger 30 vertikal pendelnd verbunden ist. Der Aufnehmer 16 wird in dem bevorzugten Ausführungsbeispiel auf nicht gezeigte Weise hydraulisch angetrieben.

Der erste Förderer 18 ist derart an den Rahmen 32 angeschlossen, daß sich seine Förderfläche im Bereich und unterhalb der Abgabeöffnung 24 horizontal oder geringfügig geneigt erstreckt. Eine Förderfläche kann von verschiedenen Komponenten, z. B. einem Förderband, Rollen, Kratz- oder Stabketten auf einer Gleitfläche oder gar von einer Schnecke gebildet werden. Wesentlich ist die Förderung. Der Förderer 18 kann hinten mit einer sich vertikal erstreckenden Wand 38 versehen sein, die verhindert, daß das durch die Abgabeöffnung 24 abgegebene Gut von der Förderfläche fällt. Der Förderer 18 wird in dem bevorzugten Ausführungsbeispiel auf nicht gezeigte Weise hydraulisch angetrieben und zwar vorzugsweise mit einer Schaltvorrichtung, die zwei Umlaufrichtungen ermöglicht. Gegebenenfalls kann auch die Geschwindigkeit des Förderers 18 und somit dessen Abwurfweite variabel ausgeführt werden.

Der gegebenenfalls vorhandene weitere Förderer 20 ist im wesentlichen in gleicher Weise wie der erste Förderer 18 ausgebildet und befindet sich seitlich von ihm, so daß die Förderflächen aufeinander folgen und das von stromaufwärts kommende Gut aufnehmen kann. Der weitere Förderer 20 läuft in der gleichen Richtung um bzw. transportiert in der gleichen Richtung wie der erste Förderer 18 und ist vorzugsweise auch in der gleichen Weise angetrieben. Der weitere Förderer 20 ist an dem Anschlussmittel 28 befestigt. Die Befestigung kann dabei starr oder auch beweglich ausgebildet sein, wobei letzteres es ermöglicht, von der Weiterbeförderung durch den weiteren Förderer 20 Gebrauch zu machen oder nicht. Gegebenenfalls kann der weitere Förderer 20 zur Seite oder nach oben oder unten geklappt werden, wenn er nicht benutzt werden soll; eine Verstellvorrichtung ist jedoch nicht gezeigt. Der weitere Förderer 20 befindet sich im wesentlichen hinter dem Fahrzeug 10.

Das Anschlussmittel 28 ist gemäß dem bevorzugten Ausführungsbeispiel mit einer sich vertikal erstreckenden Platte 40 versehen, die mehrere Bohrungen aufweist, durch die Schrauben zur Verbindung mit dem Fahrwerk des Fahrzeugs 10 gesteckt werden können. An der Rückseite der Platte 40 befindet sich eine große und eine kleine Gelenkgabel 42 und 44, jeweils mit einer horizontalen Lagerachse.

Der Träger 30 ist im wesentlichen als Rohr und zweischenklig ausgebildet und einenends mit der großen Gelenkgabel 42 und anderenends mit dem Rahmen 32 in dem Lager 36 vertikal schwenkbar verbunden. Die Geometrie des Trägers 30 ist so gewählt, daß der Aufnehmer 16 in den von den Schenkeln begrenzten Eckbereich eintauchen kann, wenn der Träger 30 vertikal hoch verschwenkt wird. Nahe des unteren und der großen Gelenkgabel 42 zugelegenen Endes ist der Träger 30 mit einem Anschluß 46 versehen, der aus zwei Laschen oder dergleichen gebildet werden kann und ebenfalls eine horizontale Lagerachse bietet. Alle Lagerachsen verlaufen parallel zueinander und in der Fahrtrichtung. Zwischen dem Anschluß 46 und der kleinen Gelenkgabel 44 erstreckt sich eine Stellvorrichtung 48, die in dem bevorzugten Ausführungsbeispiel als ein doppeltwirkender Hydraulikzylinder ausgebildet ist und eine vertikale Stellbewegung des Trägers 30 in der großen Gelenkgabel 42 bewirken kann. Anstatt des Hydraulikzylinders kann auch ein anderer Hydraulikmotor, ein Seilzug, ein Hebel oder dergleichen verwendet werden. Die Gelenkgabeln 42, 44, der Träger 30 und der Rahmen 32 sind so angeordnet, daß sich die Vorderkante des Aufnehmers 16 stets hinter der Hinterkante des Fahrwerks befindet und somit an dessen Rückseite vorbei geschwenkt werden kann. In der Stellung hinter dem Fahrgestell 50 nimmt die Vorrichtung 14 eine Außerbetriebsstellung ein.

Der Träger 30 könnte in einer abgewandelten Ausführungsform auch unterhalb des Aufnehmers 16 und des Förderers 18 angreifen und somit diese beiden sowohl rechts als auch links des Fahrgestells 50 platzieren.

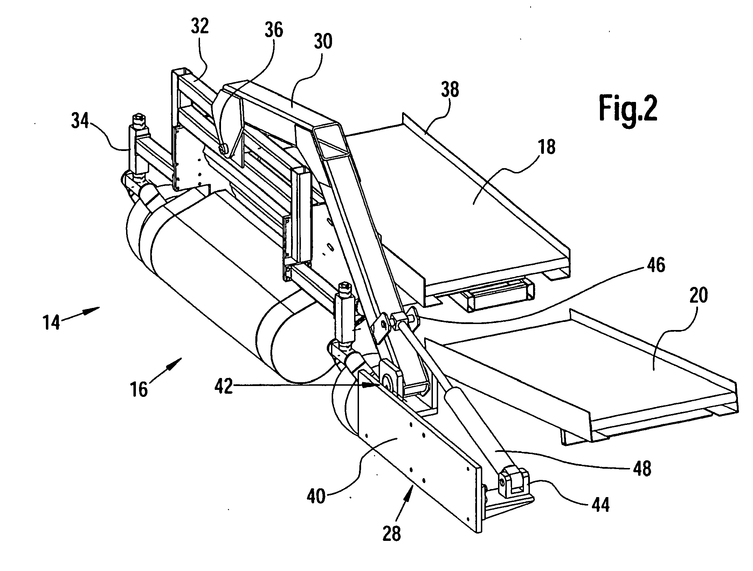

Wie es sich aus Figur 2 ergibt, kann der Aufnehmer 16 mit dem ersten Förderer 18 aus einer gezeigten Stellung seitlich des Anschlussmittels 30 und auf oder unmittelbar über dem Boden in eine Stellung gebracht werden, in der sich beide oberhalb des Anschlussmittels 30 und gegebenenfalls oberhalb des weiteren Förderers 20 befinden.

Im weiteren wird Bezug auf das in den Figuren 3 bis 6 Gezeigte genommen, in denen verschiedene Ausführungen bzw. Anordnungen der Vorrichtung 14 dargestellt sind.

In Figur 3 ist eine Vorrichtung 14 mit einem Aufnehmer 16 und einem ersten Förderer 18 gezeigt, die sich beide rechts des Fahrwerks befinden und somit das rechts aufgenommene Gut hinter dem Fahrzeug 10 zu dessen Mitte fördern.

Figur 4 zeigt eine Vorrichtung 14 hinter dem Fahrwerk, die das Gut zwischen den Rädern 26 aufnimmt und es nach links oder rechts befördert.

Figur 5 stellt eine spiegelbildliche Anordnung zu Figur 3 dar, so daß Gut auf der linken Seite aufgenommen und zur Mitte befördert wird.

Nach Figur 6 wird auf beiden Seiten des Fahrwerks Gut aufgenommen und jeweils hinter dem Fahrwerk zur Mitte gefördert, wo es auf einem evtl. mittleren Schwad abgelegt wird.

Diese Anordnungen stellen Alternativen zu der in Figur 1 gezeigten Anordnung dar, in der das rechts des Fahrwerks aufgenommene Gut zu einer Stelle links von ihm transportiert wird.

All diese Anordnungen erlauben ein Verfahren zum Ernten und Gruppieren von Halmgut, das folgende Verfahrensschritte aufweist:
a) das Gut wird von einer an einem Fahrzeug 10 vorgesehenen Mähvorrichtung 12 mit wenigstens zwei Abgabeöffnungen 24 geschnitten,
b) das Gut wird von der Mähvorrichtung 12 auf den Boden abgelegt, und
c) das Gut wird stromabwärts der Ablagestelle von der Vorrichtung 14 aufgenommen und zur Seite neben oder auf ein weiteres Schwad gefördert.

## Patentansprüche

1. Vorrichtung (14) mit einem Aufnehmer (16), der geeignet ist, Erntegut vom Boden aufzunehmen, mit einem Förderer (18) und mit einem Anschlussmittel (28) zur Verbindung mit einem Fahrzeug (10), insbesondere einem Mähfahrzeug, **dadurch gekennzeichnet, daß** sich die Anschlussseite des Anschlussmittels (28) auf der Aufnahmeseite der Vorrichtung (14) befindet und wenigstens der Aufnehmer (16) mittels eines beweglichen Trägers (30) an dem Anschlussmittel (28) angebracht und für den Betrieb an eine andere Stelle verbringbar ist.

2. Vorrichtung nach Anspruch 1, **dadurch gekennzeichnet, daß** der Aufnehmer (16) in einer räumlich festen Beziehung mit dem Förderer (18) verbunden ist.

3. Vorrichtung nach einem oder mehreren der vorherigen Ansprüche, **dadurch gekennzeichnet, daß** ein weiterer Förderer (20) mit dem Anschlussmittel (28) verbunden ist.

4. Vorrichtung nach einem oder mehreren der vorherigen Ansprüche, **dadurch gekennzeichnet, daß** der weitere Förderer (20) verstellbar ist.

5. Vorrichtung nach einem oder mehreren der vorherigen Ansprüche, **gekennzeichnet durch** Stützräder (34).

6. Vorrichtung nach einem oder mehreren der vorherigen Ansprüche, **dadurch gekennzeichnet, daß** der oder die Förderer (18, 20) als Förderband, Förderschnecke, Stabkettenförderer oder parallel zueinander verlaufende Rollen ausgebildet ist.

7. Fahrzeug (10), insbesondere selbstfahrender Feldhäcksler, mit an der Vorderseite angebauter Mähvorrichtung (12) und an der Rückseite angebauter Vorrichtung (14) nach einem oder mehreren der vorherigen Ansprüche.

8. Fahrzeug nach Anspruch 7, **dadurch gekennzeichnet, daß** die Mähvorrichtung (12) wenigstens eine seitlich der Begrenzung des Fahrzeugs (10) gelegene Abgabeöffnung (24) aufweist.

9. Fahrzeug nach Anspruch 7 oder 8, **dadurch gekennzeichnet, daß** die Verbindung des Anschlussmittels (28) mit dem Fahrzeug (10) über eine Dreipunktgerätekupplung erfolgt.

10. Fahrzeug nach einem oder mehreren der vorherigen Ansprüche, **dadurch gekennzeichnet, daß** der Antrieb des Aufnehmers (16) und/oder des oder der Förderer (18, 20) hydraulisch erfolgt.

11. Fahrzeug nach einem oder mehreren der vorherigen Ansprüche, **dadurch gekennzeichnet, daß** zwei Aufnehmer (16) mit jeweils einem Förderer (18) vorgesehen sind.

12. Verfahren zum Ernten und Gruppieren von Halmgut, **dadurch gekennzeichnet, daß**:
a) das Gut von einer an einem Fahrzeug (10) vorgesehenen Mähvorrichtung (12) mit wenigstens zwei Abgabeöffnungen (24) geschnitten wird,
b) das Gut von der Mähvorrichtung (12) auf den Boden abgelegt wird, und
c) das Gut stromabwärts der Ablagestelle von einer an dem Fahrzeug (10) angeordneten Vorrichtung (14) nach einem oder mehreren der vorherigen Ansprüche 1 bis 11, aufgenommen und zur Seite neben oder auf ein weiteres Schwad gefördert wird.

## Claims

1. Implement (14) with a pick-up (16) that is suitable for picking up crop material from the ground, with a conveyor (18) and with a connecting structure (28) for connection to a vehicle (10), in particular a mowing vehicle, **characterised in that** the connection side of the connecting structure (28) is located on the pick-up side of the implement (14) and at least the pick-up (16) is attached to the connecting structure (28) by means of a movable carrier (30) and can be moved to another location for operation.

2. Implement according to Claim 1, **characterised in that** the pick-up (16) is connected to the conveyor (18) in a spatially fixed relationship.

3. Implement according to one or more of the previous claims, **characterised in that** a further conveyor (20) is connected to the connecting structure (28).

4. Implement according to one or more of the previous claims, **characterised in that** the further conveyor (20) is adjustable.

5. Implement according to one or more of the previous claims, **characterised by** caster wheels (34).

6. Implement according to one or more of the previous claims, **characterised in that** the conveyor or conveyors (18, 20) is/are configured as a conveyor belt, screw conveyor, bar chain conveyor or rolls running parallel to one another.

7. Vehicle (10), in particular a self-propelled forage harvester, with a mowing arrangement (12) mounted on the front side and an implement (14) mounted on the rear side according to one or more the previous claims.

8. Vehicle according to Claim 7, **characterised in that** the mowing arrangement (12) has at least one discharge opening (24) located at the side of the boundary of the vehicle (10).

9. Vehicle according to Claim 7 or 8, **characterised in that** the connecting structure (28) is connected to the vehicle (10) by means of a three-point implement hitch.

10. Vehicle according to one or more of the previous claims, **characterised in that** the pick-up (16) and/or the conveyor or conveyors (18, 20) are driven by hydraulic means.

11. Vehicle according to one or more of the previous claims, **characterised in that** two pick-ups (16) are each provided with a conveyor (18).

12. Process for harvesting and merging cereal crop material, **characterised in that**:
a) the crop material is cut by a mowing arrangement (12) having at least two discharge openings (24) and provided on the vehicle (10),
b) the crop material is deposited on the ground by the mowing arrangement (12), and
c) the crop material is picked up downstream of the deposit location by a device (14) arranged on the vehicle (10) according to one or more of previous Claims 1 to 11 and is conveyed alongside or onto a further swath.

## Revendications

1. Dispositif (14) comprenant un ramasseur (16), qui est approprié pour ramasser le produit de récolte sur le sol, un convoyeur (18) et un moyen de raccordement (28) pour la liaison avec un véhicule (10), en particulier un véhicule de fauchage, **caractérisé en ce que** le côté raccordement du moyen de raccordement (28) se trouve sur le côté réception du dispositif (14) et au moins le ramasseur (16) est placé au moyen d'un support (30) mobile sur le moyen de raccordement (28) et peut être amené pour l'exploitation en un autre emplacement.

2. Dispositif selon la revendication 1, **caractérisé en ce que** le ramasseur (16) est relié au convoyeur (18) dans une relation fixe dans l'espace.

3. Dispositif selon l'une quelconque ou plusieurs des revendications précédentes, **caractérisé en ce qu'**un autre convoyeur (20) est relié au moyen de raccordement (28).

4. Dispositif selon l'une quelconque ou plusieurs des revendications précédentes, **caractérisé en ce que** l'autre convoyeur (20) est réglable.

5. Dispositif selon l'une quelconque ou plusieurs des revendications précédentes, **caractérisé par** des roues de support (34).

6. Dispositif selon l'une quelconque ou plusieurs des revendications précédentes, **caractérisé en ce que** le ou les convoyeurs (18, 20) sont conçus comme bande transporteuse, vis sans fin de transport, convoyeur à chaînes à barres ou sous forme de rouleaux agencés parallèlement entre eux.

7. Véhicule (10), en particulier ramasseuse-hacheuse automotrice, avec dispositif de fauchage (12) rapporté sur le côté avant et dispositif (14) rapporté sur le côté arrière selon l'une quelconque ou plusieurs des revendications précédentes.

8. Véhicule selon la revendication 7, **caractérisé en ce que** le dispositif de fauchage (12) présente au moins une ouverture de dépose (24) située sur le côté de délimitation du véhicule (10).

9. Véhicule selon la revendication 7 ou 8, **caractérisé en ce que** la liaison du moyen de raccordement (28) avec le véhicule (10) s'effectue au moyen d'un accouplement d'appareil à trois points.

10. Véhicule selon l'une quelconque ou plusieurs des revendications précédentes, **caractérisé en ce que** l'entraînement du ramasseur (16) et/ou du ou des transporteurs (18, 20) s'effectue de façon hydraulique.

11. Véhicule selon l'une quelconque ou plusieurs des revendications précédentes, **caractérisé en ce que** deux ramasseurs (16) sont prévus avec chacun un convoyeur (18).

12. Procédé pour récolter et grouper un produit à tiges, **caractérisé en ce que** :
a) le produit est coupé par un dispositif de fauchage (12) prévu sur un véhicule (10) avec au moins deux ouvertures de distribution (24),
b) le produit est déposé par le dispositif de fauchage (12) sur le sol, et
c) le produit est réceptionné en aval de l'endroit de distribution par un dispositif (14) disposé sur le véhicule (10) selon l'une quelconque ou plusieurs des revendications 1 à 11 précédentes, ramassé et transporté sur le côté ou sur un autre andain.
